Europäisches Patentamt

European Patent Office

Office européen des brevets

(19)

(11) Publication number: **0 085 046**
**B1**

(12) **EUROPEAN PATENT SPECIFICATION**

(45) Date of publication of patent specification: **15.10.86**

(51) Int. Cl.⁴: **C 08 L 69/00**

(21) Application number: **81902226.0**

(22) Date of filing: **10.08.81**

(86) International application number:
**PCT/US81/01066**

(87) International publication number:
**WO 83/00493 17.02.83 Gazette 83/05**

(54) **POLYCARBONATE COMPOSITIONS.**

(43) Date of publication of application:
**10.08.83 Bulletin 83/32**

(45) Publication of the grant of the patent:
**15.10.86 Bulletin 86/42**

(84) Designated Contracting States:
**DE FR GB NL**

(56) References cited:
**JP-A-43 013 384**
**US-A-3 520 768**
**US-A-3 957 921**
**US-A-4 082 715**
**US-A-4 107 386**
**US-A-4 148 842**
**US-A-4 201 828**
**US-A-4 257 937**
**US-A-4 260 693**
**US-A-4 263 415**

(73) Proprietor: **GENERAL ELECTRIC COMPANY**
**1 River Road**
**Schenectady New York 12305 (US)**

(72) Inventor: **LIU, Ping Yuan**
**124 Tanager Court**
**Naperville, IL 60540 (US)**

(74) Representative: **Catherine, Alain et al**
**General Electric - Deutschland Munich Patent**
**Operations Frauenstrasse 32**
**D-8000 München 5 (DE)**

Courier Press, Leamington Spa, England.

## Description

The present invention is directed to high molecular weight, aromatic polycarbonate compositions having improved aged impact strength and improved low temperature impact strength.

It is well known that high molecular weight, aromatic polycarbonate resins have high impact strength below a critical thickness of between about 1/2 (1.27 cm) and 1/4 inches (0.635 cm). Above this average thickness, the impact strength of such polycarbonate resins is low. It is also known that the impact strength of these polycarbonate resins decreases rapidly as temperatures decrease below about −5°C as well as after aging at elevated temperatures above about 100°C. These characteristics limit the fields of applications of these resins. Thus, unmodified polycarbonates are not practical for use at low or high temperatures, particularly when good impact strength is required. Therefore, it is desirable to improve the impact strength of polycarbonate resins at both low and high temperatures as well as improve their aged impact strength and thereby expand the fields of application of such resins.

It has now been found that additional ternary compositions comprising in admixture, a high molecular weight, thermoplastic, aromatic polycarbonate, 2—4 parts by weight per hundred parts of aromatic polycarbonate of an acrylate copolymer, and 0.4—2.0 parts by weight per hundred parts of aromatic polycarbonate of an organic, ester-type plasticizer selected from azelate esters, adipate esters and phthalate ester also exhibit improved aged impact strength and that certain formulations thereof exhibit improved impact strength at both low and high temperatures as compared to unmodified polycarbonate resins.

The high molecular weight, thermoplastic, aromatic polycarbonates which can be employed in the present invention are those homopolycarbonates and copolycarbonates and mixtures thereof which have average molecular weights of about 8,000 to more than 200,000, preferably about 20,000 to 80,000, and an intrinsic viscosity (I.V.) of about 0.40 to 1.0 deciliters/grams (dl/g) as measured in methylene chloride at 25°C. These polycarbonates are typically derived from dihydric phenols, for example, 2,2 - bis(4 - hydroxyphenyl)propane (also referred to as bisphenol-A; i.e., BPA), bis(4 - hydroxyphenyl)methane, 2,2 - bis(4 - hydroxy - 3 - methylphenyl)propane, 4,4 - bis(4 - hydroxyphenyl)heptane, 2,2 - (3,5,3',5' - tetrachloro - 4,4' - dihydroxyphenyl)propane, 2,2 - (3,5,3',5' - tetrabromo - 4,4' - dihydroxydiphenyl)propane, and (3,3' - dichloro - 4,4' - dihydroxydiphenyl)methane. Other dihydric phenols which are suitable for use in preparing these polycarbonates are disclosed in U.S. Pat. Nos. 2,999,835; 3,028,365; 3,334,154; and 4,131,575.

The aromatic polycarbonates of the invention can be manufactured by known processes such as, for example, the interfacial polymerization technique wherein a dihydric phenol is reacted with a carbonate precursor, such as phosgene, in the presence of a suitable organic medium, such as methylene chloride. These processes are disclosed in the above identified U.S. Pats. as well as in U.S. Pat. Nos. 4,018,750 and 4,123,436. Transesterification processes can also be employed to prepare these resins such as are disclosed in U.S. Pat. No. 3,153,008, as well as other processes known to those skilled in the art.

The aromatic polycarbonates of the invention can also include the polymeric derivates of a dihydric phenol, a dicarboxylic acid, and carbonic acid, such as are disclosed in U.S. Pat. No. 3,169,131.

It is also possible to employ two or more different dihydric phenols or a copolymer of a dihydric phenol with a glycol or with hydroxy or acid terminated polyester, or with a dibasic acid in the event a carbonate copolymer or interpolymer rather than a homopolymer is desired for use in preparing the aromatic polycarbonate to be employed in the invention. In addition, blends of any of the above materials can be used to provide the aromatic polycarbonate.

Further, branched polycarbonates, such as are disclosed in U.S. Pat. No. 4,001,184 can also be employed as can blends of a linear polycarbonate and a branched polycarbonate to provide the aromatic polycarbonate of the invention.

The "acrylate" copolymer employed in the invention is a copolymer of a $C_1$—$C_5$ methacrylate and a $C_1$—$C_5$ acrylate, wherein the "$C_1$—$C_5$" represents both saturated and unsaturated, straight or branched chained aliphatic hydrocarbon radicals having from 1 to 5 carbon atoms and which can be employed in amounts of about 2—4 parts by weight per hundred parts of aromatic polycarbonate.

Preferred acrylates for use in the acrylate copolymer are methyl acrylate, ethyl acrylate, isobutyl acrylate, 1,4-butanediol diacrylate, n-butyl acrylate, and 1,3-butylene diacrylate. Preferred methacrylates for use in this copolymer include methyl methacrylate, isobutyl methacrylate, 1,3-butylene dimethacrylate, butyl methacrylate and ethyl methacrylate.

Based on the total weight of the copolymer, the acrylate portion thereof can range from about 50—85 weight percent and the methacrylate portion thereof can range from about 15—50 weight percent.

The preferred acrylate copolymer for use in this invention is a copolymer of n-butyl acrylate and methyl methacrylate wherein the weight ratio of n-butyl acrylate: methyl methacrylate is about 3:2.

Suitable acrylate copolymers can be prepared by methods well known to those skilled in the art or can be obtained commercially. For example, Rohm and Haas' Acryloid® KM 330 copolymer, which is a copolymer of n-butyl acrylate and methyl methacrylate, is suitable for use in the present invention.

The organic, ester-type plasticizers which can be employed in the invention are azelate esters, adipate esters and phthalate esters, all of which are commercially available. The azelate esters include such compounds as di-n-hexyl azelate and di - (2 - ethylhexyl)azelate. Di-cyclohexyl phthalate and di(2-ethyl hexyl) adipate illustrate the type of phthalate ester and adipate ester compounds which can be used. For low temperature applications, di-n-hexyl azelate is preferred.

The amount of organic, ester-type plasticizer which can be employed in the ternary compositions of the invention can range from about 0.4—2.0 parts by weight, preferably 0.5—1.5 parts by weight, per hundred parts of the aromatic polycarbonate.

It is also regarded to be among the features of this invention to include in the ternary polycarbonate composition conventional additives for purposes such as reinforcing, coloring or stabilizing the composition in conventional amounts.

The compositions of the invention are prepared by mechanically blending the high molecular weight aromatic polycarbonate with the organic, ester-type plasticizer and the acrylate copolymer by conventional methods.

Examples

The following examples set forth the best mode currently known to illustrate the invention. In the examples, all parts and percentages are by weight unless otherwise specified.

Example 1

Ninety-five and one-half (95.5) parts of an aromatic polycarbonate, derived from 2,2 - bis(4 - hydroxyphenyl) propane and having an intrinsic viscosity (I.V.) in the range of from about 0.46 to about 0.49 dl/g as determined in methylene chloride solution at 25°C, was mixed with four (4) parts of an acrylate copolymer of n-butyl acrylate and methyl methacrylate having a weight ratio of n-butyl-acrylate: methyl methacrylate of about 3:2, and one half (0.5) part of di-n-hexyl azelate as the organic, ester-type plasticizer. The ingredients were then blended together by mechanically mixing them in a laboratory tumbler and the resulting mixture was fed to an extruder which was operated at about 265°C. The resulting extrudate was comminuted into pellets and the pellets were injection molded at about 290°C—310°C into test specimens of about 5″ by 1/2″ by 1/4″ (12.70 cm×1.27 cm×0.635 cm) and 5″ by 1/2″ by 1/8″, (12.70 cm×1.27 cm×0.318 cm) the latter dimensions being the specimen thicknesses. Izod impact strengths of these specimens were measured according to the notched Izod test, ASTM D256, and are set forth in Table I. The ductile-brittle (D/B) transition temperatures, (the highest temperature at which a sample begins to exhibit a brittle mode of failure rather than a ductile mode of failure) were obtained according to the procedures of ASTM D256 and are also listed in Table I. The sample labelled CONTROL was obtained from a polycarbonate resin having an I.V. of about 0.46—0.49 dl/g and was prepared without either the acrylate copolymer or the organic ester-type plasticizer.

Example 2

The procedure of Exampel 1 was repeated exactly, except that the weight parts of polycarbonate, acrylate copolymer and the di-n-hexyl azelate (DNHA) in the test specimen were, respectively, 95, 4 and 1. The test results obtained are listed in Table I.

Example 3

The procedure of Example 1 was repeated exactly, except that the weight parts of polycarbonate, acrylate copolymer and DNHA in the test specimens were, respectively, 94.5, 4 and 1.5. The test results obtained are listed in Table I.

Example 4

The procedure of Example 1 was repeated exactly, except that the weight parts of polycarbonate, acrylate copolymer and DNHA in the test specimens were, respectively, 96, 3 and 1. The test results obtained are listed in Table I.

TABLE I

Impact strength, ft. lb/in (kg mm/mm)

| Composition of: | 1/4" (0.635 cm) thick not aged | 1/8" (0.318 cm) thick not aged | 1/8" (0.318 cm) heat aged at 125°C 24 hrs. | 48 hrs. | D/B, °C** 1/8" (0.3189 cm) not aged |
|---|---|---|---|---|---|
| Example 1 | 12.8[1] (6.91) | * | 12.0[1] (6.48) | 12.6[1] (6.80) | −12/−18 (−6.48/−9.72) |
| Example 2 | 11.6[1] (6.26) | 15.3[1] (8.26) | 11.9[1] (6.43) | 11.0[1] (5.94) | −12/−18 (−6.48/−9.72) |
| Example 3 | 10.7[1] (5.78) | 15.3[1] (8.26) | 12.6[1] (6.80) | 12.3[1] (6.64) | −12/−18 (−6.48/−9.72) |
| Example 4 | 3.7[2] (2.0) | 15.3[1] (8.26) | 2.6[2] (1.40) | 2.5[2] (1.35) | * |
| CONTROL | 1.6[2] (0.86) | 14.8[1] (7.99) | 1.3[2] (0.70) | * | >−5 (−2.70) |

[1] Samples failed with 100% ductility.
[2] Samples failed with 0% ductility.
* Test not made.
** Change from ductile mode of failure to brittle mode of failure noted over indicated range.

## Claims

1. A ternary polycarbonate composition comprising in admixture, a high molecular weight aromatic polycarbonate, 2—4 parts by weight per hundred parts of the aromatic polycarbonate of an acrylate copolymer which is a copolymer of a $C_1$—$C_5$ acrylate and a $C_1$—$C_5$ methacrylate, and 0.4—2.0 parts by weight per hundred parts of aromatic polycarbonate of an organic, ester-type plasticizer selected from azelate esters, adipate esters and phthalate esters.

2. The composition of claim 1 wherein said organic, ester-type plasticizer is present in an amount of 0.5—1.5 parts by weight per hundred parts of aromatic polycarbonate.

3. The composition of claim 1 wherein the acrylate portion of said acrylate copolymer is selected from ethyl acrylate, n-butyl acrylate, 1,3-butylene diacrylate, isobutyl acrylate, 1,4-butanediol diacrylate and methyl acrylate and the methacrylate portion of said acrylate copolymer is selected from methyl methacrylate, 1,3 butylene dimethacrylate, isobutyl methacrylate, butyl methacrylate and ethyl methacrylate.

4. The composition of claim 3 wherein the aromatic polycarbonate is derived from 2,2 - bis(4 - hydroxyphenyl) - propane.

5. The composition of claim 3 wherein the weight ratio of acrylate:methacrylate in said acrylate copolymer ranges from 50—85:15—50.

6. A ternary polycarbonate composition comprising an admixture of a high molecular weight aromatic polycarbonate; an acrylate copolymer in an amount of 2—4 parts by weight per hundred parts of said aromatic polycarbonate, said acrylate copolymer being a copolymer of a $C_1$—$C_5$ acrylate and a $C_1$—$C_5$ methacrylate, said acrylate being selected from methyl acrylate, ethyl acrylate, n-butyl acrylate, 1,3-butylene diacrylate, isobutyl acrylate, and 1,4-butanediol diacrylate, and said methacrylate being selected from methylmethacrylate, ethyl methacrylate, butyl methacrylate, isobutyl methacrylate, and 1,3-butylene dimethacrylate; and, an organic, ester-type plasticizer in an amount of 0.4—2.0 parts by weight per hundred parts of said aromatic polycarbonate selected from azelate esters, adipate esters, and phthalate esters.

7. The composition of claim 6 wherein said aromatic polycarbonate is derived from 2,2 - bis(4 - hydroxy phenyl)propane.

8. The composition of claim 6 wherein said organic, ester-type plasticizer is present in an amount of 0.5—1.5 parts by weight per hundred parts of said aromatic polycarbonate.

9. The composition of claim 6 wherein the weight ratio of acrylate:methacrylate in said acrylate copolymer ranges from 50—85:15—50.

## Patentansprüche

1. Ternäre Polycarbonat-Zusammensetzung, dadurch gekennzeichnet, daß sie in Mischung ein aromatisches Polycarbonat mit hohem Molekulargewicht, 2 bis 4 Gewichtsteile pro 100 Teile des aromatischen Polycarbonats eines Acrylat-Copolymeren, das ein Copolymeres aus einem $C_1$—$C_5$-Acrylat und einem $C_1$—$C_5$-Methacrylat ist, und 0,4 bis 2,0 Gewichtsteile pro 100 Teile des aromatischen Polycarbonats eines organischen Weichmachers vom Ester-Typ, ausgewählt aus Azelatestern, Adipatestern und Phthalatestern, enthält.

2. Zusammensetzung nach Anspruch 1, dadurch gekennzeichnet, daß der organische Weichmacher vom Ester-Tpe in einer Menge von 0,5 bis 1,5 Gewichtsteilen pro 100 Teile des aromatischen Polycarbonats zugegen ist.

3. Zusammensetzung nach Anspruch 1, dadurch gekennzeichnet, daß der Acrylatteil des Acrylat-Copolymeren aus Äthylacrylat, n-Butylacrylat, 1,3-Butylendiacrylat, Isobutylacrylat, 1,4-Butandioldiacrylat und Methylacrylat ausgewählst ist und der Methacrylatteil des Acrylat-Copolymeren aus Methylmethacrylat, 1,3-Butylendimethacrylat, Isobutylmethacrylat, Butylmethacrylat und Äthylmethacrylat ausgewählt ist.

4. Zusammensetzung nach Anspruch 3, dadurch gekennzeichnet, daß das aromatische Polycarbonat von 2,2 - Bis(4 - hydroxyphenyl) - propan abgeleitet ist.

5. Zusammensetzung nach Anspruch 3, dadurch gekennzeichnet, daß das Gewichtsverhältnis von Acrylat:Methacrylat in dem Acrylat-Copolymeren im Bereich von 50—85:15—50 liegt.

6. Ternäre Polycarbonat-Zusammensetzung, dadurch gekennzeichnet, daß sie eine Mischung eines aromatischen Polycarbonats mit hohem Molekulargewicht, eines Acrylat-Copolymeren in einer Menge von 2 bis 4 Gewichtsteilen pro 100 Teile des aromatischen Polycarbonats, wobei das Acrylat-Copolymere ein Copolymeres von einem $C_1$—$C_5$-Acrylat und einem $C_1$—$C_5$-Methacrylat ist, das Acrylat aus Methylacrylat, Äthylacrylat, n-Butylacrylat, 1,3 Butylendiacrylat, Isobutylacrylat und 1,4-Butandioldiacrylat ausgewählt ist und das Methacrylat aus Methylmethacrylat, Äthylmethacrylat, Butylmethacrylat, Isobutylmethacrylat und 1,3-Butylendimethacrylat ausgewähtl ist, und eines organischen Weichmächers vom Ester-Typ in einer Menge von 0,4 bis 2,0 Gewichtsteilen pro 100 Teile des aromatischen Polycarbonats, ausgewählt aus Azelatestern, Adipatestern und Phthalatestern, enthält.

7. Zusammensetzung nach Anspruch 6, dadurch gekennzeichnet, daß das aromatische Polycarbonat von 2,2 - Bis(4 - hydroxyphenyl) - propane abgeleitet ist.

8. Zusammensetzung nach Anspruch 6, dadurch gekennzeichnet, daß der organische Weichmacher vom Ester-Typ in einer Menge von 0,5 bis 1,5 Gewichtsteile pro 100 Teile des aromatischen Polycarbonats zugegen ist.

9. Zusammensetzung nach Anspruch 6, dadurch gekennzeichnet, daß das Gewichtsverhältnis von Acrylat:Methacrylat in dem Acrylat-Copolymeren im Bereich von 50—85:15—50 liegt.

**Revendications**

1. Composition de polycarbonate ternaire comprenant en mélange, un polycarbonate aromatique de masse molaire élevée, de 2 à 4 parties en poids pour 100 parties du polycarbonate aromatique d'un copolymètre d'acrylate qui est un copolymère d'un acrylate de $C_1$—$C_5$ et d'un méthacrylate de $C_1$—$C_5$, et de 0,4 à 2,0 parties en poids pour 100 parties du polycarbonate aromatique d'un plastifiant organique du type ester choisi parmi les azélate, des adipates et des phtalates.

2. Composition selon la revendication 1, dans laquelle le plastifiant organique du type ester est présent en une quantité de 0,5—1,5 parties en poids pour 100 parties de polycarbonate aromatique.

3. Composition selon la revendication 1 dans laquelle la partie acrylate du copolymère d'acrylate est choisie parmi l'acrylate d'éthyle, l'acrylate de n-butyle, le diacrylate de butylène-1,3, l'acrylate d'isobutyle, le diacrylate de butanediol-1,4 et l'acrylate de méthyle et la partie méthacrylate du composant du copolymère d'acrylate est choisi parmi le méthacrylate de méthyle, le diméthacrylate de butylène 1,3, le méthacrylate d'isobutyle, le méthacrylate de butyle et le méthacrylate d'éthyle.

4. Composition selon la revendication 3 dans laquelle le polycarbonate aromatique est dérivé du bis(hydroxy-4 phényl)-2,2 propane.

5. Composition selon la revendication 3 dans laquelle le rapport pondéral acrylate:méthacrylate dans le copolymère d'acrylate est compris entre 50—85:15—50.

6. Composition de polycarbonate ternaire comprenant en mélange un polycarbonate aromatique de masse molaire élevée, un copolymère d'acrylate en une quantité de 2 à 4 parties en poids pour 100 parties du polycarbonate aromatique, le copolymère d'acrylate étant un copolymère d'un acrylate de $C_1$—$C_5$ et d'un méthacrylate de $C_1$—$C_5$, l'acrylate étant choisi parmi l'acrylate de méthyle, l'acrylate d'éthyle, l'acrylate de n-butyle, le diacrylate de butylène-1,3, l'acrylate d'isobutyle, et le diacrylate de butanediol-1,4 et le méthacrylate étant choisi parmi le méthacrylate de méthyle, le méthacrylate d'éthyle, le méthacrylate de butyle, le méthacrylate d'isobutyle et le diméthacrylate de butylène-1,3; et un plastifiant organique du type ester en une quantité de 0,4 à 2,0 parties en poids pour 100 parties du polycarbonate aromatique choisi parmi les azelates, les adipates, et les phtalates.

7. Composition selon la revendication 6 dans laquelle le polycarbonate aromatique est dérivé du bis(hydroxy-4 phényl)-2,2 propane.

8. Composition selon la revendication 6 dans laquelle le plastifiant organique du type ester est présent en une quantité de 0,5—1,5 parties en poids pour 100 parties du polycarbonate aromatique.

9. Composition selon la revendication 6, caractérisée en ce que le rapport pondéral acrylate:méthacrylate dans le copolymère d'acrylate est compris entre 50—85:15—50.